# EUROPEAN PATENT SPECIFICATION

(11) **EP 1 745 948 B1**
(45) Date of publication and mention of the grant of the patent: **07.01.2009**
(21) Application number: 05425528.6
(22) Date of filing: 22.07.2005
(51) Int. Cl.: B60C 27/18

(54) **Textile and elastic anti-skid device for vehicle tyres**
Textile und elastische Gleitschutzvorrichtung für Fahrzeugreifen
Dispositif antidérapant élastique et textile pour pneumatiques

(43) Date of publication of application: 24.01.2007
(73) Proprietor: Gima S.r.l., 20123 Milano MI (IT)
(72) Inventor: Figini, Alessandro, 23868 Valmadrera (LC) (IT)
(74) Representative: Perani, Aurelio

(56) References cited:
- WO-A-00/59745
- DE-A1- 2 108 386
- DE-U1- 20 115 651
- US-A- 2 392 577
- US-A- 2 682 907

## Description

This invention relates to a device which is capable of increasing the grip of a vehicle tyre in the presence of surfaces having a low friction coefficient according to the precharacterising clause of claim 1.

Devices capable of increasing the grip of a vehicle tyre in the case of surfaces having a low friction coefficient, such as for example snow, ice or mud, are known in the state of the art.

For example, patent US 2682907 describes a skid-prevention device comprising a belt or strip of rough hemp which can be positioned on the outer surface of a vehicle tyre. In particular the strip is provided with lateral bands which are positioned on the outer and inner shoulders of the tyre, where an elastic member is provided to tension the belt.

The text of patent US 2682907 subsequently discloses that the belt is constructed in such a way that it can be applied closely to the tread of the tyre. This feature obviously requires that the vehicle's wheel be first lifted off the ground in order for the belt to be positioned on the tyre.

Another problem occurring in the case of the invention described in the abovementioned patent derives from the fact that the belt may become accidentally detached from the tyre towards the vehicle's interior. In this way it could create a hazardous situation in that the inwardly moving belt could interfere with the vehicle's steering and braking mechanisms, with obvious and imaginable consequences. When a situation of this type arises the wheel must first be removed in order to remove the belt or the belt must be destroyed.

Another device for preventing the skidding of a vehicle tyre on surfaces having a low friction coefficient is known from Japanese patent JP1249503, in which an anti-skid belt of a particular width such as to surround the tread of the tyre and having a predetermined play (or gap) between the strip and the tread of the tyre is illustrated.

This belt as described by the text of the patent is capable of providing better grip to the road surface when the tyre is rotating.

In particular the non-skid belt comprises blocks of rubber which are in contact with the ground surface and lateral bands surrounding the inner and outer shoulders of the tyre respectively, with a view to at least ideally preventing loss of the belt during rotation of the tyre.

However the presence of these rubber blocks on the outer surface of the anti-skid belt or on the surface in contact with the road surface only partly solves the problem of grip in the presence of surfaces having a low friction coefficient.

In fact it is obvious that such an anti-skid belt has as its main function that of preserving the integrity of the tyre's tread and of causing the least possible damage to the road surface when the vehicle is in motion.

Another example of a device capable of increasing the grip of a tyre in the presence of surfaces having a low friction coefficient is described in patent application WO 00/59745, which shows the features of the preamble of claim 1.

The specified aim of this application is to provide a device for covering a tyre which can be fitted to a vehicle wheel even when the wheel is standing on the ground. In order for it to be possible to achieve this object it is described that the inner circumference of the device must be such that it must be 4 to 10% and preferably 5 to 6% larger than the greater circumference of the tyre.

The text of the patent also teaches that the device is provided with lateral bands which are positioned on the outer and inner shoulders of the tyre, where an elastic member is provided to tension the belt.

Again this type of device is not devoid of disadvantages, even though it permits easier and more immediate fitting than the devices in the known art.

In fact while the tyre is rolling there is the possibility that the device, being larger than the major circumference of the tyre, might interfere with the wheel arch or the steering and traction mechanisms.

This eventuality could give rise to early wear of the device and in the worst of situations damage which would prevent its use.

This happens because of the fact that, because the device is constructed of a textile material, it undergoes a kind of swelling as the tyre rotates because of the centrifugal force. It is precisely because of the swelling of the material that there may be interference with the wheel arch or with the vehicle's steering and traction mechanisms.

It is obvious that the larger the device in comparison with the outer circumference of the tyre, the more easily the phenomena described above will occur.

Another problem which may arise if the device is adopted as described in patent application WO 00/59745 is that of slip of the tyre with respect to the device.

In fact when the friction coefficient of the surface is particularly low, for example in the case of icy snow or ice, there is the possibility that a difference in rotation speed will be set up between the tyre and the device, that is mutual slip between the tyre and the device.

This slip may result in rotation of the tyre within the device without sufficient grip or grip on the part of the device on the surface, or sufficient grip to permit movement of the vehicle.

This disadvantage is due to the fact that the device is only held on the wheel by the elastic member positioned on the inner lateral band of the device.

Finally, such a device may have the further problem of accidental loss during rotation of the tyre, giving rise to more than negligible economic loss to the user.

In the light of the state of the art described the object of this invention is to overcome the problems illustrated above with reference to the documents in the known art.

According to this invention this object is accomplished through a device which is capable of increasing the grip of a vehicle tyre in the presence of surfaces having a low friction coefficient such as snow, ice and mud in accordance with the characterising part of claim 1.

Through this invention it is possible to provide a device capable of increasing the grip of a vehicle tyre without any risk of the device coming loose during rotation of the tyre.

Another advantage of this invention is to produce deformation of the surface of the fabric in such a way as to increase the anti-skid effect.

There is also the not insignificant advantage that through the presence of the elastic means it is possible to reduce the swelling effect which occurs when the vehicle is in motion, thus avoiding hazardous rubbing against mechanical parts or parts of the bodywork.

Another advantage of this invention is that of providing a device which is simple and economical to manufacture, is noise-free and has no vibration when the vehicle is in motion on road surfaces devoid of snow, ice or mud.

Finally, the device according to the invention is very simple to install and remove from the tyre.

The features and advantages of this invention will be apparent from the following detailed description of a number of embodiments illustrated by way of non-restrictive examples in the appended drawings, in which:
- Figure 1 shows a perspective view in partial cross-section of an embodiment of the device according to this invention when fitted to a vehicle tyre,
- Figure 2 shows a view in cross-section of the embodiment of the device in Figure 1,
- Figure 3 shows another embodiment of the device according to the invention,
- Figure 4 shows another embodiment of the device according to the invention,
- Figure 5 shows a further embodiment of the device according to the invention,
- Figure 6 shows another perspective view of another embodiment of the device when fitted to a vehicle tyre according to the invention,
- Figure 7 shows another perspective view of another embodiment of the device when fitted to a vehicle tyre according to the invention.

With reference to the appended figures, 1 indicates as a whole the device capable of increasing the grip of a tyre 2 of a vehicle (not shown in the appended figures) in the presence of surfaces having a low friction coefficient such as snow, ice or mud, according to the invention.

Device 1 comprises a belt 3 which is capable of surrounding the entire width "L" of the tread of tyre 2 in such a way as to enclose or circumscribe it with a predetermined play.
Belt 3 has outer 4 and inner 5 side portions capable of surrounding the outer 2A and inner 2B shoulders of said tyre 2 respectively.

These side portions 4 and 5 can advantageously extend radially so as to assist fitting of device 1 to tyre 2.

Thus once mounted on tyre 2 belt 3 has a transverse extension which is at least equal to the width "L" of the tread of tyre 2.

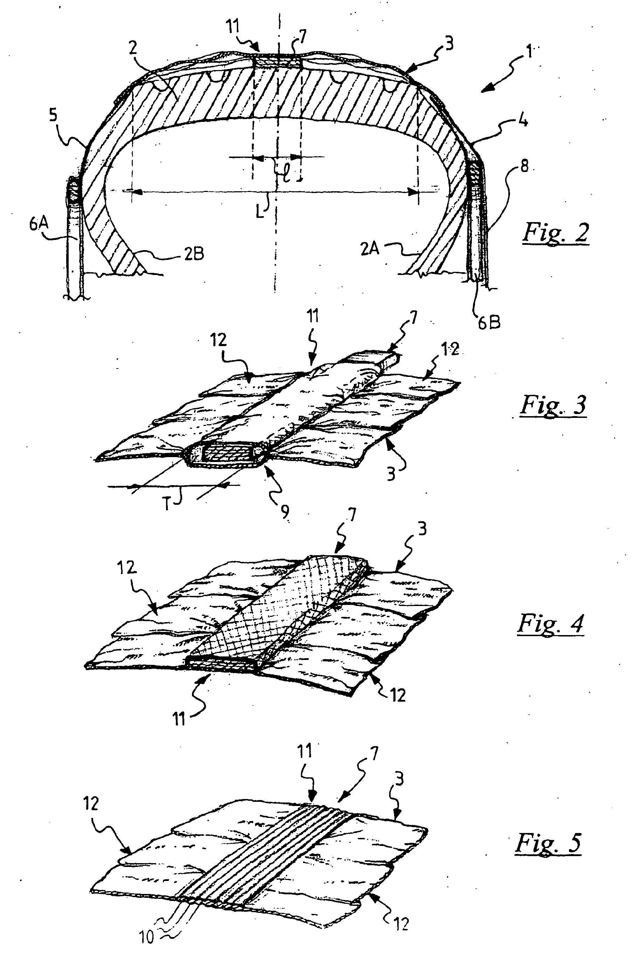

It should be noted that, as illustrated in detail in Figure 2, both the inner 5 and outer 4 side portions of belt 3 have an elastic member 6A and 6B respectively capable of holding belt 3 in the correct fitted position while tyre 2 rotates.

Alternatively it is provided that belt 3 has only one elastic member 6A capable of holding it in position at least on the inner side of shoulder 2B of tyre 2.

The materials used to construct belt 3 according to this invention may be:
- high strength polyester fibres or yarns, which may or may not take a dye,
- polypropylene, which also may or may not take a dye,
- taslanised polypropylene, which also may or may not take a dye,
- variable compositions of various fibres, such as for example 50% polyester with 50% polypropylene, or 50% taslanised polypropylene,
- para and meta aramide fibres,
- high strength polyamide fibres such as nylon, cordura, etc., in order to extend the service life of the device.

Obviously a person skilled in the art will be able to replace the abovementioned materials for the manufacture of belt 3 by other types of structurally and/or functionally equivalent materials.

It should be noted that the inner surface of belt 3, that is the surface of belt 3 against the tread of tyre 2, may advantageously be treated in such a way as to have rubber members deposited upon it in the form of "pellets" (a technique usually called "dot coating").

This treatment of the inner surface of belt 3 encourages better grip between belt 3 and the tread of tyre 2 so as to restrict if not eliminate slip of tyre 2 with respect to belt 3 in the presence of surfaces having a very low friction coefficient.

Advantageously it is also provided that these rubber members ("dot coating") may be deposited on the outer surface of belt 3 (not illustrated in the appended figures), that is on the surface of belt 3 which is in contact with the surface.

This treatment of the outer surface of belt 3 favours the following properties:
- better stability of belt 3 with respect to the transverse forces which are generated during movement of the tyre when the vehicle is travelling through a bend, such as to prevent the accidental loss of device 1 from tyre 2,
- better grip for belt 3 in the presence of surfaces having a very low friction coefficient, such as to further increase grip on snow and ice beyond that ensured by the materials (previously listed) constituting belt 3.

The material used for depositing the dot coating of the aforesaid rubber members according to this invention may be polyurethane, or butadiene rubber or neoprene rubber and the like.

As already described, belt 3 has outer 4 and inner 5 side portions which can extend radially to enclose the outer 2A and inner 2B shoulders of said tyre 2 respectively.

These side portions 4 and 5 comprise a material which is lighter and more flexible and has a lower friction coefficient than the material comprising belt 3.

It should be noted that outer 4 and inner 5 side portions are directly woven with belt 3 in each longitudinal profile.

Obviously a person skilled in the art may provide other structurally and/or functionally equivalent types of operations as a replacement for the sewing operation between the outer 4 and inner 5 side portions and belt 3.

In the preferred embodiment outer 4 and inner 5 side portions of belt 3 partly enclose outer 2A and inner 2B shoulders of said tyre 2 respectively.

The materials used to manufacture outer 4 and inner 5 side portions according to this invention may be:
- fibre having a low friction coefficient,
- polyester,
- polypropylene,
- butadiene rubber, and
- neoprene rubber.

These materials make it easier for a user to fit device 1 on tyre 2 in the operations of fitting the same, as it can be easily stretched by the user.

As previously described, outer 4 and inner 5 side portions comprise elastic members 6A and 6B.

These elastic members 6A and 6B are advantageously directly connected to each longitudinal profile of side portions 4 and 5 through a sewing operation.

The function of elastic members 6A and 6B is to ensure that accidental loss of device 1 from tyre 2 while the latter is in rotation will not occur.

The materials used to manufacture elastic members 6A and 6B according to this invention may be:
- elastomer fibre compositions with polyester,
- elastomer fibre compositions with nylon polyester or polyamide.

The essential feature of this invention is that belt 3 comprises a circumferential portion 11 provided with elastic means 7.

These elastic means 7 are advantageously capable of causing said circumferential portion 11 to adhere to the tread surface of said tyre 2.

In particular circumferential portion 11 of belt 3 extends axially along the axis of rotation X-X of tyre 2.

Elastic means 7 take the form of an elastic belt having a width "1" equal to or 4% larger than the width "L" of the tread of tyre 2, preferably a width "1" within a range of 4 to 18% with respect to the width of tyre 2.

The width of circumferential portion 11 is therefore preferably equal to the width "1" of elastic means 7.

In this way it is advantageously brought about that belt 3 of device 1 remains firmly in position on tyre 2, that is elastic means 7 ensure firm grip of belt 3 to the surface of tyre 2 and at the same time produce a kind of deformation or gather in the remaining surface portion of belt 3.

This surface deformation of belt 3 is capable of increasing the grip of the belt in the presence of surfaces having a low friction coefficient, in that the surface area of device 1 in contact with the surface is increased.

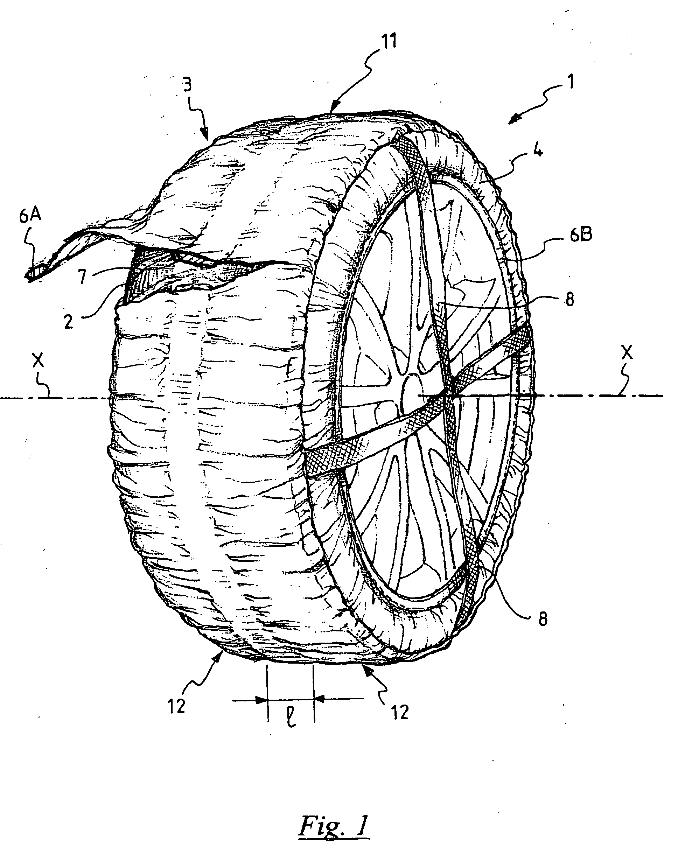

In other words, as shown in Figure 1, the following are obtained:
- a central portion 11 of belt 3 closely adhering to the tread of tyre 2 substantially devoid of deformation or gather or a substantially smooth area,
- and two peripheral portions 12 of belt 3 in which the material comprising belt 3 has play (or a gap) with respect to the tread of tyre 2 in such a way that gathers can form.

Through this invention device 1 is advantageously prevented from interfering with mechanical parts or the bodywork of the vehicle.

Elastic means 7 should therefore be capable of adhering closely to the tread of tyre 2, which involves providing elastic means of different circumference and different elasticity to adhere to different sizes of tyre.

It should not be forgotten that once suitable elasticity or a suitable elastic constant has been selected it is only necessary to define the dimension of the circumference of the elastic means, this dimension ensuring that the circumferential portion 11 of belt 3 adheres closely to the surface of the tread of tyre 2.

For example in the case where the tyre has a width "L" or a footprint on the ground of 195 mm, the width "1" of elastic means 7, according to the values described above, must be greater than or equal to 7.8 mm and preferably must lie within the range from 7.8 mm to 35.1 mm.

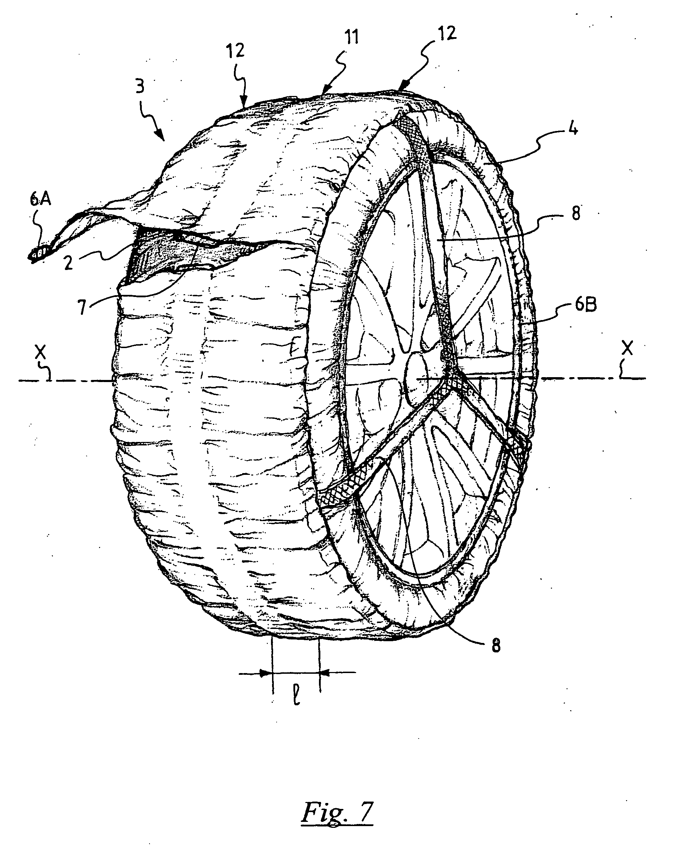

With reference to the embodiments illustrated in Figures 1 and 7 it is therefore obtained that the width of circumferential portion 11 of belt 3 must be greater than or equal to 7.8 mm, and preferably should lie within the range from 7.8 mm to 35.1 mm.

Thanks to this invention the swelling effect of belt 3 when tyre 2 rotates is avoided.

The inclusion of elastic means 7 also makes it possible to increase the number of tyre sizes which device 1 according to this invention will fit.

In fact, where particular structural requirements have to be satisfied, it is envisaged that two or more elastic belts, which might also have different widths, alternating with the material comprising belt 3 may be provided.

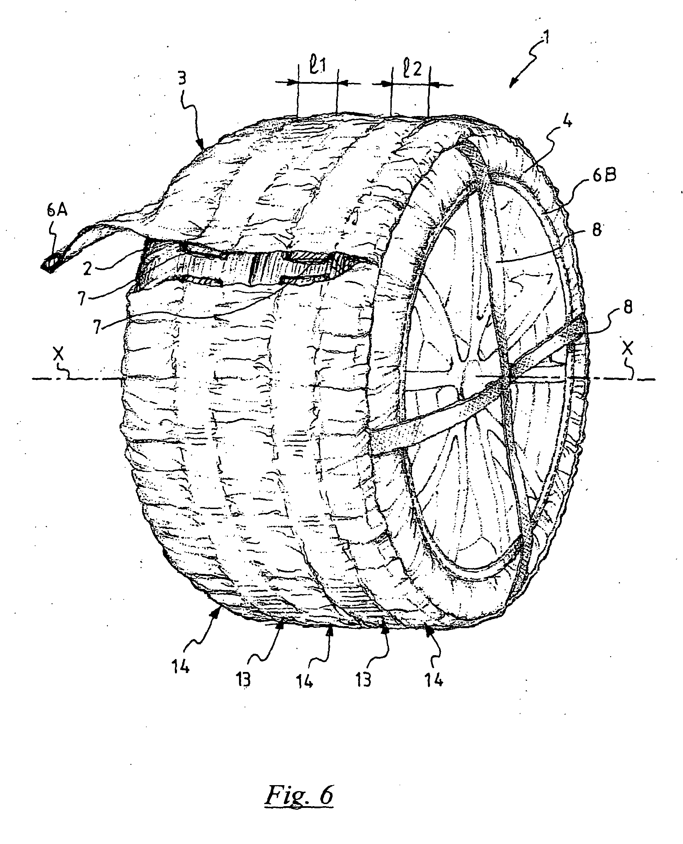

With particular reference to Figure 6, it will be noted that belt 3 comprises two circumferential portions 13, each of which is provided with elastic means 7.

Elastic means 7 take the form of a pair of elastic belts having widths "11" and "12" which are capable of causing circumferential portions 13 to adhere to the surface of the tread of said tyre 2.

Similarly to what is illustrated in Figure 1, again here in this specific embodiment two separate areas adhering to the tread which are substantially free of gathers or deformations on the outer surface of the material of belt 3 and a further 3 zones 14 in which the material constituting belt 3 has play with respect to the tread of tyre 2, where it is possible for gathers to form, are produced.

It should be noted that again in this specific embodiment the sum of the widths "11" and "12", that is "11" and in addition "12", may be equal to or greater than 4% of the width "L" of tyre 2, preferably lying within the range from 4 to 18% of the width "L" of the tread of tyre 2.

With particular reference now to Figures 1, 6 and 7, in which an embodiment of this invention is illustrated, it will be noted that elastic means 7 are constructed in such a way as to be in direct contact with the tread of tyre 2.

It therefore follows that the elastic belt (Figures 1 and 7) or the elastic belts (Figure 6) are connected to the lower surface of belt 3 by means of a sewing or weaving operation, that is elastic means 7 are in contact with the tread of tyre 2.

This arrangement provides optimum protection of the elastic belt against wear due to the rolling of tyre 2 on surfaces having a high friction coefficient, such as for example an asphalt road surface.

Thanks to this embodiment the probability that device 1 may come off tyre 2 and be lost is also reduced.

Figures 4 and 5 illustrate a further two arrangements of elastic means 7 according to this invention.

With reference now to Figure 4 it will be noted that elastic means 7 are in direct contact with the road surface, that is they are located on the outer surface of belt 3.

In this specific embodiment the elastic belt is subjected to special antiabrasion treatment which permits limited wear when the tyre is running on surfaces having a high friction coefficient, such as for example an asphalt road surface.

Again in this example the width "1" of elastic means 7 must be equal to or greater than 4% of width "L" of tyre 2, preferably lying within the range from 4 to 18% of the width "L" of the tread of tyre 2.

With reference to Figure 5 it will be noted that elastic means 7 are obtained by inserting one or more threads 10 of elastic material grouped together to form the elastic belt through weaving operations in the material comprising belt 3.

In particular the threads 10 of elastic material constitute a set of circumferentially tensioned threads designed to cross the warp of the material comprising belt 3. This arrangement ensures greater reliability in terms of the service life of device 1.

Again in this embodiment the overall width of threads 10 must be equal to or greater than 4% of the width "L" of tyre 2, preferably lying within the range from 4 to 18% of the width "L" of the tread of tyre 2.

It should be pointed out that the embodiments illustrated with reference to Figures 4 and 5 also make it possible to obtain the following:
- circumferential portion 11 adheres closely to the surface of the tread of tyre 2 and is substantially devoid of deformations or gathers,
- the two peripheral portions 12 of belt 3 have play with respect to the tread of tyre 2 in such a way that gathers can form.

It should be noted that elastic means 7 described hitherto are capable of surrounding the entire circumference of the tread of tyre 2, but in an alternative embodiment of this invention (not illustrated in these figures) elastic means 7 may run along a circumferential portion of the tread of tyre 2.

In other words elastic means 7, that is the elastic belt (Figures 1 or 7) or the elastic belts (Figure 6), run circumferentially over only a portion of the overall circumference of tyre 2.

This specific embodiment is more economical to manufacture in that it provides for use of less material for the manufacture of elastic means 7.

The materials used for the manufacture of elastic means 7 according to this invention may be:
- elastomer fibre compositions with polyester,
- elastomer fibre compositions with nylon polyester or polyamide.

In Figures 1 and 6 it will further be noted that device 1 comprises two strips 8 (or braces) at right angles on the outer side which extend diametrically.

These strips 8 may be connected directly to belt 3 by a sewing operation. It should be noted that in the area where the two strips 8 cross there is further sewing to connect the strips together.

Strips 8 are useful when a user desires to remove device 1 from tyre 2, because these offer an easy and secure grip.

Alternatively, three strips arranged in a star-type configuration with three points (Figure 7) are provided instead of two strips at right angles. In the area where the three strips 8 cross there is further sewing to connect the strips together.

The materials used to manufacture strips 8 according to this invention may be:
- polyester,
- polypropylene.

With reference now to Figure 3, another embodiment of this invention is illustrated.

It will be noted from that Figure 3 that the circumferential portion 11 of strip 3 comprises a sheath (or pocket) 9 which preferably extends over the entire circumference of tyre 2. In particular this sheath 9 is connected to the material comprising belt 3 through a sewing or weaving operation.

It should be pointed out that sheath 9 can be constructed using the same materials as comprising belt 3, or different materials.

According to a preferred aspect of this embodiment, sheath 9 has an axial width "T" along the axis of rotation X-X which is greater than or equal to the width "1" of elastic means 7.

In other words, as may be seen in Figure 3, the following is obtained:
- sheath 9 (and therefore circumferential portion 11 of belt 3) closely adheres to the surface of the tread of tyre 2 and is substantially devoid of deformations or gathers,
- the two peripheral portions 12 of belt 3 have play with respect to the tread of tyre 2 in such a way that gathers can form.

Thus circumferential portion 11 of belt 3 has an axial width equal to the axial width "T" of sheath 9, or an axial width which is greater than the width "1" of elastic means 7.

When the elastic belt is inserted into sheath 9, in addition to the advantages mentioned in relation to the embodiment previously described with reference to Figures 1, 6 and 7, optimum protection of elastic means 7 against wear due to friction with the tread of tyre 2 is obtained.

Obviously in order to satisfy contingent and specific requirements a person skilled in the art may apply many modifications and variants to the configurations described above, all of which however fall within the scope of protection of the invention as defined by the following claims.

## Claims

1. Device designed to increase the grip of a tyre (2) of a motor vehicle in the presence of surfaces having a low friction coefficient comprising a belt (3) capable of surrounding the entire width (L) of the tread of the tyre (2) in such a way as to enclose it with a predetermined play, the said belt (3) having outer and inner side portions (4, 5) which extend radially and are capable of partly enclosing the outer and inner shoulders (2A, 2B) of the said tyre (2) respectively in such a way as to hold the belt (3) in position on the tyre (2),the said belt (3) having an elastic member (6A) capable of holding it in the said position at least on the inner side of the shoulder of the tyre (2), **characterised in that** the said belt (3) comprises at least one axially extending circumferential portion (11, 13) which comprises elastic means (7) capable of causing it to adhere to the said at least one circumferential portion (11, 13) of the surface of the tread of the said tyre (2).

2. Device according to claim 1, **characterised in that** the said elastic means (7) have a width (1) which is greater than or equal to 4% of the width (L) of the tread of the tyre (2), preferably from 4 to 18% of the width (L) of the tyre (2).

3. Device according to claim 1 and 2, **characterised in that** the said elastic means (7) enclose the entire circumference of the tread of the tyre (2), the said elastic means (11) being capable of causing the said at least one circumferential portion (11, 13) to adhere to the entire surface of the tread of the said tyre (2).

4. Device according to any one of claims 1 to 3, **characterised in that** the said at least one circumferential portion (11, 13) has two axially extending circumferential portions, each of which have elastic means (7) having a particular width (11, 12).

5. Device according to claim 4, **characterised in that** the sum of the said widths (11 + 12) of the said elastic means (7) is equal to or greater than 4% of the width (L) of the tread of the tyre (2), preferably from 4 to 18% of the width (L) of the tyre (2).

6. Device according to any one of claims 1 to 5, **characterised in that** the said elastic means (7) are connected to the said belt (3) by weaving or sewing or threading.

7. Device according to claim 6, **characterised in that** the said elastic means (7) are positioned in such a way that they face the tread of the said tyre (2).

8. Device according to claim 6, **characterised in that** the said elastic means (7) are positioned in such a way as to face the road surface.

9. Device according to any one of claims 1 to 5, **characterised in that** the said at least one circumferential portion (11) of the belt (3) comprises a sheath (9), the said sheath (9) extending along the entire circumference of the said tyre (2), the said elastic means (7) being housed within the said sheath (9).

10. Device according to claim 9, **characterised in that** the said sheath (9) has an axial width (T) which is greater than or equal to the width (1) of the said elastic means (7).

11. Device according to any one of claims 1 to 5, **characterised in that** the said elastic means (7) are obtained by inserting at least one thread (10) of elastic material in the material constituting the belt (3) through weaving operations.

12. Device according to any one of claims 1 to 11, **characterised in that** the said outer portion (4) of the said belt (3) comprises another elastic member (6B) to hold the belt (3) in the said position also on the outer side (2A) of the shoulder of the tyre (2).

13. Device according to any one of claims 1 to 12, **characterised in that** the said belt (3) comprises at least two strips (8) on the outside of the said tyre (2) which extend diametrically.

14. Device according to any one of claims 1 to 12, **characterised in that** the said belt (3) has three strips (8) on the outer side of the said tyre (2) arranged in a configuration of the star type with three points.

15. Device according to any one of the preceding claims, **characterised in that** the said elastic means (7) comprise an elastic belt.

16. Device according to any one of the preceding claims, **characterised in that** the said elastic means (7) are constructed from a composition of elastomer fibres with polyester, or from a composition of elastomer fibres with polyester nylon or polyamide.

17. device according to any one of the preceding claims, **characterised in that** the said belt (3) is manufactured using high strength polyester fibres or yarns which may or may not take a dye or polypropylene which also may or may not take a dye or taslanised polypropylene which may or may not take a dye or variable compositions of the various fibres or para and meta aramide fibres or polyamide fibres.

18. Device according to any one of the preceding claims, **characterised in that** the said outer and inner side portions (4, 5) are manufactured from fibres having a low friction coefficient or polyester or polypropylene or butadiene rubber or neoprene rubber.

## Patentansprüche

1. Eine Vorrichtung, die zur Steigerung der Haftung eines Reifens (2) eines Kraftfahrzeugs in Anwesenheit von Oberflächen entworfen wurde, die einen geringen Reibungskoeffizienten besitzen, die einen Gurt (3) umfasst, der die gesamte Weite (L) vom Profil des Reifens (2) derart einfassen kann, dass er mit einem vorher festgelegten Spielraum umschlossen wird, wobei der besagte Gurt (3) äußere und innere Abschnitte (4, 5) besitzt, die sich radial ausdehnen und teilweise die äußeren beziehungsweise inneren Schultern (2A, 2B) des besagten Reifens (2) derart einfassen können, dass der Gurt (3) in Stellung auf dem Reifen (2) gehalten wird, wobei der besagte Gurt (3) ein elastisches Element (6A) besitzt, das ihn in der besagten Stellung zumindest auf der Innenseite der Schulter des Reifens (2) halten kann, **dadurch gekennzeichnet, dass** der besagte Gurt (3) mindestens einen sich axial ausdehnenden umlaufenden Abschnitt (11, 13) umfasst, welcher ein elastisches Mittel (7) umfasst, das bewirken kann, dass dieses an dem mindestens einen umlaufenden Abschnitt (11, 13) der Oberfläche vom Profil des besagten Reifens (2) anhaftet.

2. Eine Vorrichtung nach Anspruch 1, **dadurch gekennzeichnet, dass** das besagte Mittel (7) eine Weite (I) besitzt, die größer oder gleich 4% der Weite (L) vom Profil des Reifens (2) ist, wobei sie vorzugsweise von 4 bis 18% der Weite (L) des Reifens (2) beträgt.

3. Eine Vorrichtung nach Anspruch 1 und 2, **dadurch gekennzeichnet, dass** das besagte elastische Mittel (7) den gesamten Umfang vom Profil des Reifens (2) einfasst, wobei das besagte elastische Mittel (11) bewirken kann, dass der besagte mindestens eine umlaufende Abschnitt (11, 13) an der gesamten Oberfläche vom Profil des besagten Reifens (2) anhaftet.

4. Eine Vorrichtung nach jedem der Ansprüche von 1 bis 3, **dadurch gekennzeichnet, dass** der besagte mindestens eine umlaufende Abschnitt (11, 13) zwei sich axial ausdehnende umlaufende Abschnitte besitzt, von welchen jeder ein elastisches Mittel (7) besitzt, das eine spezielle Weite (11, 12) hat.

5. Eine Vorrichtung nach Anspruch 4, **dadurch gekennzeichnet, dass** die Summe der besagten Weiten (11 + 12) des besagten elastischen Mittels (7) gleich oder größer als 4% der Weite (L) vom Profil des Reifens (2) ist, wobei sie vorzugsweise von 4 bis 18% der Weite (L) des Reifens (2) beträgt.

6. Eine Vorrichtung nach irgendeinem der vorhergehenden Ansprüche von 1 bis 5, **dadurch gekennzeichnet, dass** das besagte elastische Mittel (7) mit dem besagten Gurt (3) auf gewobene, genähte oder aufgefädelte Weise verbunden ist.

7. Eine Vorrichtung nach Anspruch 6, **dadurch gekennzeichnet, dass** das besagte elastische Mittel (7) derart positioniert ist, dass es zum Profil des besagten Reifens (2) gerichtet ist.

8. Eine Vorrichtung nach Anspruch 6, **dadurch gekennzeichnet, dass** das besagte elastische Mittel (7) derart positioniert ist, dass es zur Fahrbahn gerichtet ist.

9. Eine Vorrichtung nach irgendeinem der vorhergehenden Ansprüche von 1 bis 5, **dadurch gekennzeichnet, dass** der besagte mindestens eine umlaufende Abschnitt (11) des Gurtes (3) eine Ummantelung (9) umfasst, wobei sich die besagte Ummantelung (9) entlang des gesamten Umfanges des besagten Reifens (2) ausdehnt und das besagte elastische Mittel (7) in der besagten Ummantelung (9) untergebracht ist.

10. Eine Vorrichtung nach Anspruch 9, **dadurch gekennzeichnet, dass** die besagte Ummantelung (9) eine axiale Weite (T) besitzt, die größer oder gleich der Weite (I) des besagten elastischen Mittels (7) ist.

11. Eine Vorrichtung nach irgendeinem der vorhergehenden Ansprüche von 1 bis 5, **dadurch gekennzeichnet, dass** das besagte elastische Mittel (7) **dadurch** erhalten wird, dass mindestens ein Faden (10) aus elastischem Material in das Material eingefügt wird, aus dem der Gurt (3) durch Weben erzeugt wird.

12. Eine Vorrichtung nach irgendeinem der vorhergehenden Ansprüche von 1 bis 11, **dadurch gekennzeichnet, dass** der besagte äußere Abschnitt (4) des besagten Gurtes (3) ein weiteres elastisches Element (6B) umfasst, um den Gurt (3) in der besagten Stellung auch auf der Außenseite (2A) der Schulter des Reifens (2) zu halten.

13. Eine Vorrichtung nach irgendeinem der vorhergehenden Ansprüche von 1 bis 12, **dadurch gekennzeichnet, dass** der besagte Gurt (3) mindestens zwei Streifen (8) auf der Außenseite des besagten Reifens (2) umfasst, die sich diametrisch ausdehnen.

14. Eine Vorrichtung nach irgendeinem der vorhergehenden Ansprüche von 1 bis 12, **dadurch gekennzeichnet, dass** der besagte Gurt (3) mindestens drei Streifen (8) auf der Außenseite des besagten Reifens (2) umfasst, die in einer sternförmigen Anordnung mit drei Spitzen angebracht sind.

15. Eine Vorrichtung nach irgendeinem der vorhergehenden Ansprüche, **dadurch gekennzeichnet, dass** das besagte elastische Mittel (7) einen elastischen Gurt umfasst.

16. Eine Vorrichtung nach irgendeinem der vorhergehenden Ansprüche, **dadurch gekennzeichnet, dass** das besagte elastische Element (7) aus einer Zusammensetzung von Elastomerfasern mit Polyester oder aus einer Zusammensetzung von Elastomerfasern mit Polyester-Nylon oder PolyesterPolyamid besteht.

17. Eine Vorrichtung nach irgendeinem der vorhergehenden Ansprüche, **dadurch gekennzeichnet, dass** der besagte Gurt (3) unter Verwendung von besonders widerstandsfähigen Polyesterfasern oder Garnen, welche gefärbt werden können oder nicht, oder unter der Verwendung von Polypropylen, welches ebenfalls gefärbt werden kann oder nicht, oder von taslanisiertem Polypropylen, welches ebenfalls gefärbt werden kann oder nicht, oder unter der Verwendung von unterschiedlichen Zusammensetzungen der verschiedenen Fasern oder von Para- und Meta- Aramidfasern oder Polyamidfasern hergestellt wird.

18. Eine Vorrichtung nach irgendeinem der vorhergehenden Ansprüche, **dadurch gekennzeichnet, dass** die besagten äußeren und inneren Abschnitte (4, 5) aus Fasern, die einen geringen Reibungskoeffizienten besitzen, oder aus Polyester oder Polypropylen oder Butadienkautschuk oder Neoprenkautschuk hergestellt werden.

## Revendications

1. DISPOSITIF conçu pour améliorer l'adhérence d'un pneu (2) d'un véhicule à moteur en présence de surfaces ayant un bas coefficient de frottement comportant une courroie (3) en état d'entourer la largeur (L) tout entière de la bande de roulement du pneu (2) de façon à l'envelopper avec un jeu prédéterminé, ladite courroie (3) ayant des portions latérales extérieures et intérieures (4, 5) qui s'étendent radialement et qui sont en état d'envelopper partiellement les flancs extérieur et intérieur (2A, 2B) respectivement dudit pneu (2) de façon à retenir la courroie (3) dans sa position sur le pneu (2), ladite courroie (3) ayant un membre élastique (6A) en état de la retenir dans ladite position au moins du côté intérieur du flanc de la courroie (2), **caractérisé en ce que** ladite courroie (3) comporte au moins une portion circonférentielle s'étendant axialement (11, 13) qui inclut des moyens élastiques (7) en état de la laisser adhérer à l'au moins une portion circonférentielle (11, 13) susdite de la surface de la bande de roulement dudit pneu (2).

2. DISPOSITIF selon la revendication 1, **caractérisé en ce que** lesdits moyens élastiques (7) ont une largeur (1) qui est supérieure ou égale à 4% de la largeur (L) de la bande de roulement du pneu (2), de préférence 4 à 18% de la largeur (L) du pneu (2).

3. DISPOSITIF selon les revendications 1 et 2, **caractérisé en ce que** lesdits moyens élastiques (7) enveloppent la circonférence tout entière de la bande de roulement du pneu (2), lesdits moyens élastiques (11) étant en état de laisser adhérer l'au moins une portion circonférentielle (11, 13) susdite à la surface tout entière de la bande de roulement dudit pneu (2).

4. DISPOSITIF selon l'une quelconque des revendications 1 à 3, **caractérisé en ce que** l'au moins une portion circonférentielle (11, 13) susdite a deux portions circonférentielles s'étendant axialement, chacune d'entre lesquelles a des moyens élastiques (7) ayant une largeur particulière (11, 12).

5. DISPOSITIF selon la revendication 4, **caractérisé en ce que** la somme desdits largeurs (11 + 12) des moyens élastiques (7) est égale ou supérieure à 4% de la largeur (L) de la bande de roulement du pneu (2), de préférence 4 à 18% de la largeur (L) du pneu (2).

6. DISPOSITIF selon l'une quelconque des revendications 1 à 5, **caractérisé en ce que** lesdits moyens élastiques (7) sont reliés à ladite courroie (3) par tissage, piquage ou filetage.

7. DISPOSITIF selon la revendication 6, **caractérisé en ce que** lesdits moyens élastiques (7) sont positionnés de sorte qu'ils soient vis-à-vis de la bande de roulement dudit pneu (2).

8. DISPOSITIF selon la revendication 6, **caractérisé en ce que** lesdits moyens élastiques (7) sont positionnés de sorte qu'ils soient vis-à-vis de la chaussée.

9. DISPOSITIF selon l'une quelconque des revendications 1 à 5, **caractérisé en ce qu'**au moins une portion circonférentielle (11) susdite de la courroie (3) comporte une gaine (9), ladite gaine (9) s'étendant le long de la circonférence tout entière dudit pneu (2), lesdits moyens élastiques (7) étant logés à l'intérieur de ladite gaine (9).

10. DISPOSITIF selon la revendication 9, **caractérisé en ce que** ladite gaine (9) a une largeur axiale (T) qui est supérieure ou égale à la largeur (1) desdits moyens élastiques (7).

11. DISPOSITIF selon l'une quelconque des revendications 1 à 5, **caractérisé en ce que** lesdits moyens élastiques (7) sont obtenus par l'introduction d'au moins un fil (10) de matériau élastique dans le matériau constituant la courroie (3) moyennant des opérations de tissage.

12. DISPOSITIF selon l'une quelconque des revendications 1 à 11, **caractérisé en ce que** ladite portion extérieure (4) de ladite courroie (3) comporte un autre membre élastique (6B) pour retenir la courroie (3) dans ladite position aussi du côté extérieur (2A) du flanc du pneu (2).

13. DISPOSITIF selon l'une quelconque des revendications 1 à 12, **caractérisé en ce que** ladite courroie (3) comporte au moins deux bandes (8) du côté extérieur dudit pneu (2) qui s'étendent diamétricalement.

14. DISPOSITIF selon l'une quelconque des revendications 1 à 12, **caractérisé en ce que** ladite courroie (3) a trois bandes (8) du côté extérieur dudit pneu (2) agencées dans une configuration du type étoile avec trois points.

15. DISPOSITIF selon l'une quelconque des revendications précédentes, **caractérisé en ce que** lesdits moyens élastiques (7) comportent une courroie élastique.

16. DISPOSITIF selon n'importe quelle des revendications précédentes, **caractérisé en ce que** lesdits moyens élastiques (7) sont réalisés à partir d'une composition d'élastofibres avec polyester, ou à partir d'une composition d'élastofibres avec nylon ou polyamide polyester.

17. DISPOSITIF selon l'une quelconque des revendications précédentes, **caractérisé en ce que** ladite courroie (3) est fabriquée par l'utilisation de fibres ou fils en polyester à haute résistance qui pourraient o qui ne pourraient pas prendre un colorant ou un polypropylène qui pourrait ou qui ne pourrait pas prendre à son tour un colorant ou un polypropylène taslanisé qui pourrait ou qui ne pourrait pas prendre un colorant ou des compositions variables des différentes fibres ou fibres para et méta-aramides ou fibres polyamides.

18. DISPOSITIF selon l'une quelconque des revendications précédentes, **caractérisé en ce que** lesdites portions extérieures et intérieures (4, 5) sont fabriquées à partir de fibres ayant un bas coefficient de friction ou polyester ou polypropylène ou caoutchouc-butadiène ou caoutchouc-néoprène.
